# EUROPÄISCHE PATENTSCHRIFT

(11) **EP 1 515 172 B1**
(45) Veröffentlichungstag und Bekanntmachung des Hinweises auf die Patenterteilung: **13.12.2006**
(21) Anmeldenummer: 04021071.8
(22) Anmeldetag: 04.09.2004
(51) Int. Cl.: G02B 7/02

(54) **Spannungsarme Optikfassung**
Low stress optical mount
Monture optique à faible contrainte

(30) Priorität: 12.09.2003 DE 10342269
(43) Veröffentlichungstag der Anmeldung: 16.03.2005
(73) Patentinhaber: Carl Zeiss SMS GmbH, 07745 Jena (DE)
(72) Erfinder: Hage, Knut, 99510 Apolda (DE)

(56) Entgegenhaltungen:
- DE-A- 10 043 344
- DE-U- 7 537 569

## Beschreibung

Die Erfindung bezeiht sich auf eine spannungsarme Optikfassung mit einem Fassungsring, dessen innere Mantelfläche der Aufnahme eines Optikteils dient, welches damit in einer radialen Richtung fixiert ist, wobei die Ausrichtung des Optikteils in einer axialen Richtung durch eine Auflagefläche bestimmt ist, die gegenüber der inneren Mantelfläche der radialen Richtung entgegengesetzt so hervorsteht, dass diese auf einem Rand einer ersten optischen Fläche des Optikteils anliegt und bei der ein Dreipunkt-Federring das Optikteil in der axialen Richtung dadurch fixiert, dass drei Federn des Dreipunkt-Federrings auf einem Rand einer zweiten optischen Fläche anliegen.

Eine derartige Optikfassung ist aus der DE 75 37 569 U1 bekannt. Eine Linse ist in eine Fassung eingelegt. In radialer Richtung ist die Linse durch die innere Mantelfläche der Fassung fixiert. In axialer Richtung ist die Lage der Linse an einer Seite durch eine Auflagefläche bestimmt, deren Durchmesser kleiner als der Durchmesser der Linse ist. Von der anderen Seite her wird die Linse durch einen Federring gegen die Anlagefläche fixiert. Der Federring stützt sich gegen eine weitere Linse ab. Ein Distanzring, der gegen einen festen Anschlag geschraubt ist, legt den Luftabstand der beiden Linsen über die Durchbiegung des Federringes fest. Zwischen den beiden Linsen wird mittels des Federrings Spielfreiheit erzeugt.
Der Federring ist in einem Fall als Federscheibe mit wenigstens drei federnd aus der Scheibenfläche herausstehenden Zungen ausgebildet. In einem anderen Fall ist der Federring als Wellenfeder mit wenigstens drei am Umfang verteilten Wellen ausgebildet. Mit derartigen Anordnungen ist eine spannungsarme Fassung eines Optikteils nicht gewährleistet, weil der Lagebezug der Feder zur Fassung nicht eindeutig ist. Die herausstehenden Zungen bzw. die Wellen der Feder benötigen eine gewisse Bauhöhe in axialer Richtung.

Die DE 101 39 805 C1 und die DE 100 43 344 A1 beschreiben eine spannungsarme Linsenfassung, die eine in die Umfangsfläche der Linse eingefräste Ringnut verwendet, in die drei tragende Elemente eingreifen. Allein die bei der Herstellung der Ringnut erzeugten Kerbspannungen lassen die Lösung für eine Verwendung der Linse für Hochleistungssysteme, die insbesondere bei Wellenlängen im UV-Bereich als nicht geeignet bewerten.

Der Erfindung liegt die Aufgabe zu Grunde, eine neue spannungsarme Optikfassung zu liefern. Die Andruckkraft des Dreipunkt-Federrings soll unabhängig von anderen Anforderungen einstellbar oder nur durch die Dimensionierung der Teile vorgegeben sein. Ein oder mehrere Optikteile eines Systems soll individuell mit jeweils einem Dreipunkt-Federring gesichert werden. Die Bauhöhe in axialer Richtung soll minimiert werden. Dabei soll eine Einfache Demontierbarkeit komplexer optischer Systeme gewährleistet sei, so dass Reparaturen defekter Optikteile vergleichsweise einfach ausführbar sind.

Gemäß der Erfindung wird die Aufgabe durch eine Optikfassung der Eingangs genannten Art durch die kennzeichnenden Merkmale des Anspruchs 1 gelöst. Die Unteransprüche 2 bis 8 sind vorteilhafte Ausgestaltungen des Anspruches 1.
Die Auflagefläche des Fassungsringes weist drei Segmente auf, die bezogen auf den Umfang der inneren Mantelfläche verteilt sind und auf dem Rand der ersten optischen Fläche des Optikteils anliegen. Der Dreipunkt-Federring ist mit dem Fassungsring so verbunden, dass jeweils eine segmentförmige Druckfläche der drei Federn des Dreipunkt-Federringes der radialen Richtung entgegengesetzt nur soweit hervorsteht, dass diese nur in dem Flächenbereich, der einer Auflagefläche des Fassungsringes in der axialen Richtung gegenüberliegt auf dem Rand der zweiten optischen Fläche des Optikteils drückt. Der Dreipunkt-Federring hat drei Federn, die segmentförmige Druckflächen bilden, die nur in den Flächenbereichen, die den Auflageflächen gegenüberliegen, auf das dem Rand der zweiten optischen Fläche des Optikteils drücken.
Somit ist eine punktuelle Krafteinleitung geschaffen, die nur auf die gegenüberliegenden Auflageflächen des Fassungsringes wirkt. Die Haltekräfte sind symmetrisch verteilt und regulierbar. Der gegenüberliegende Kraftangriff reduziert die Deformation des Optikteils auf ein Minimum. Die leichte Demontierbarkeit der Fassung ermöglicht den einfachen Austausch defekter Optikteile. Eine spannungsarme Halterung der Optikteile ist insbesondere bei Optikeinheiten, bei denen es auf hohes Auflösungsvermögen ankommt und die mit kurzen Wellenlängen arbeiten, erforderlich (z.B. für Anwendungen in der Mikroelektronikindustrie). Die optischen Funktionsflächen stehen unter hohen Toleranzforderungen bezüglich Deformation, um die optische Leistung der Systeme zu gewährleisten. Durch die erfindungsgemäße Lösung werden nur Materialien eingesetzt, die gegenüber der aggressiven Strahlung resistent sind, z.B. Stahl, Messing. Insbesondere wird auf organische Materialien, wie z.B. Kleber verzichtet.
Die Optikfassung hat eine vergleichsweise geringe Bauhöhe, die in etwa der Dicke des Optikteils entspricht. So können auch kleinste Luftabstände zwischen mehreren hintereinandergefügten Optikteilen realisiert werden. Die Optikfassung hat auch eine vergleichsweise geringe radiale Ausdehnung, da die Federn nur einen geringen Platzbedarf haben.

Der Dreipunkt-Federring ist im unverbauten, spannungslosen Zustand vorzugsweise eben, mit parallel zueinander stehenden Ringflächen. Dies gewährleistet eine minimale Aufbauhöhe der Fassung in axialer Richtung. Ein solches Teil ist auch besonders kostengünstig herstellbar. Der Dreipunkt-Federring ist vergleichsweise dünn (Verhältnis Dicke zu Durchmesser ist in der Größenordnung1:100), so dass kleine Federkräfte zur Wirkung kommen. Der Dreipunkt-Federring dient ausschließlich zur Fixierung der Optik in dem Fassungsring. Die Ausrichtung der Optik kann durch Justierdrehen des Fassungsringes nach der optischen Achse des Optikteils erfolgen, wenn die zu erreichende Zentriergenauigkeit dieses erforderlich macht.

Eine vorteilhafte Ausgestaltung erfährt der Dreipunkt-Federring dadurch, dass dieser in seiner Ringfläche drei Ausnehmungen aufweist, welche die Ringfläche in vier Bereiche aufteilen, wobei ein außen liegender Bereich der Befestigung des Dreipunkt-Federringes mit dem Fassungsring dient und drei zentrumsnahe Bereiche als zweiarmig gelagerte Federn ausgebildet sind, die eine gleiche Federsteifigkeit aufweisen und nur ein Teil der Federn nur soweit in Richtung auf die Achse des Optikteils hervorstehen, dass diese auf dem Rand der optischen Fläche des Optikteils drücken. Der außen liegende Bereich dient zur Befestigung des Dreipunkt-Federringes mit dem Fassungsring und sorgt im montierten Zustand für die Vorspannung der Federn.
Diese Federn sind besonders geeignet, da diese sowohl als Biegefeder als auch als Torsionsfeder beansprucht werden.

Vorzugsweise ist jede der Ausnehmungen spiegelsymmetrisch. Dabei sind die Torsionsachsen jeder der Federn mit einem gleichen Abstand a und unter einem gleichen Winkel α bezogen zur Symmetrieachse angeordnet. Jede der Federn erhält somit definierte Eigenschaften.
Der Abstand a entspricht in etwa dem Durchmesser des zu fassenden Optikteils.

Eine weitere vorteilhafte Ausgestaltung ist dadurch gegeben, dass die Ausnehmungen einen hantelförmigen Querschnitt aufweisen. Eine solche Form vermeidet scharfe Übergänge und somit Kerbspannungen, und schafft separate definierte Federelemente. Bei der Montage der Teile werden unbestimmte Verbiegungen sicher vermieden.

Ein weiteres vorteilhaftes Merkmal ist, dass die Segmente der Auflageflächen in einem Winkel von 120° angeordnet sind und der Dreipunkt-Federring eine der 120° Teilung entsprechende Symmetrie aufweist.

Insbesondere sind alle Löcher, die Druckflächen und die Ausnehmungen in dem Dreipunkt-Federring symmetrisch. Die drei Federn haben somit weitestgehend identische Eigenschaften. Ein spannungsoptimierter Einbau des Optikteils in die Fassung ist gegeben.

In einer Ausführungsform weist der Dreipunk-Federring zur Befestigung drei Löcher auf. Mittels drei Schrauben wird der Dreipunkt-Federring mit dem Fassungsring verschraubt. Um die Bauhöhe zu minimieren, sind die Löcher als kegelförmige Senklöcher ausgebildet. Die Schrauben sind Zylinderkopfschrauben.
Die Anzugskraft der Schrauben kann bei der Verschraubung mittels eines Drehmomentschlüssels überwacht werden, so dass jede der Federn definiert vorgespannt wird und genau bemessene Kräfte auf das Optikteil einwirken.

Eine weitere Ausführungsform zur Befestigung des Dreipunkt-Federringes besteht darin, diesen mittels eines Sprengringes zu befestigen, der in eine Nut eingreift, die in einer Zylinderfläche des Fassungsringes eingebracht ist. Der Federring wird gegen eine Anlagefläche des Fassungsringes gedrückt und die Haltekräfte für das Optikteil werden durch die Dimensionierung des Dreipunkt-Federringes bestimmt. Diese Alternative zur Schraubverbindung ist kostengünstiger.
Jedoch können auch andere Befestigungsarten Anwendung finden, wie z.B. ein Vorschraubring, Nieten oder eine snap-in-Verbindung.

Die Erfindung wird nachfolgend an Hand von Ausführungsbeispielen näher erläutert werden. In den Zeichnungen zeigen:
- Fig. 1:: Dreipunkt Federring im Schnitt A-A
- Fig. 2:: Dreipunkt-Federring in der Draufsicht
- Fig. 3:: Fassungsring im Schnitt B-B
- Fig. 4:: Fassungsring in der Draufsicht
- Fig. 5:: Gefasstes Optikteil im Schnitt, Befestigung durch Senkkopfschrauben
- Fig. 6: Gefasstes Optikteil gemäß Fig. 5 in einer perspektivischen Darstellung
- Fig. 7:: Gefasstes Optikteil im Schnitt, Befestigung durch Nietverbindung
- Fig. 8: Eine andere Ausführung des Dreipunkt-Federrings

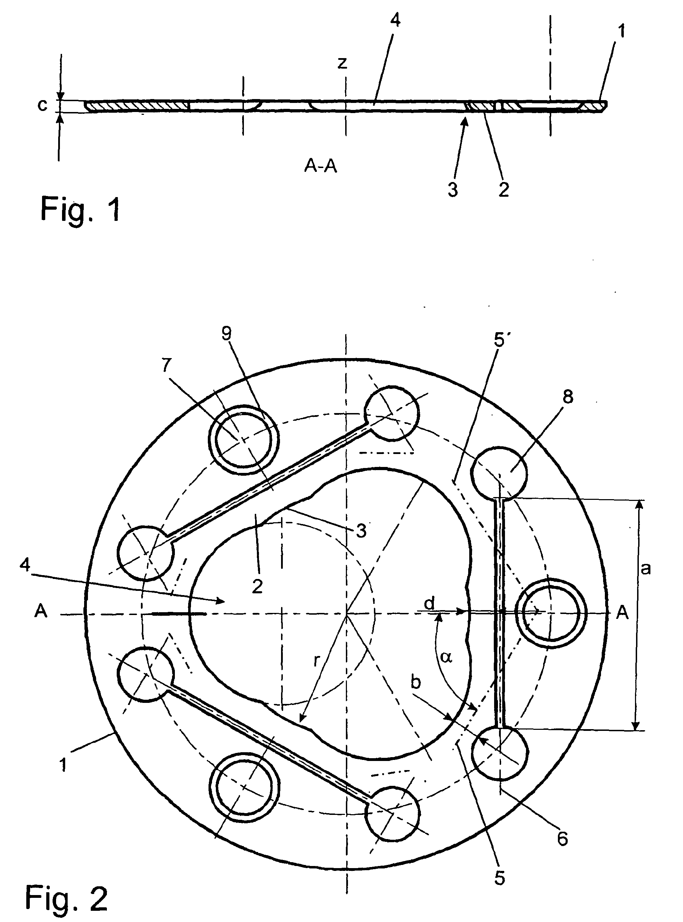

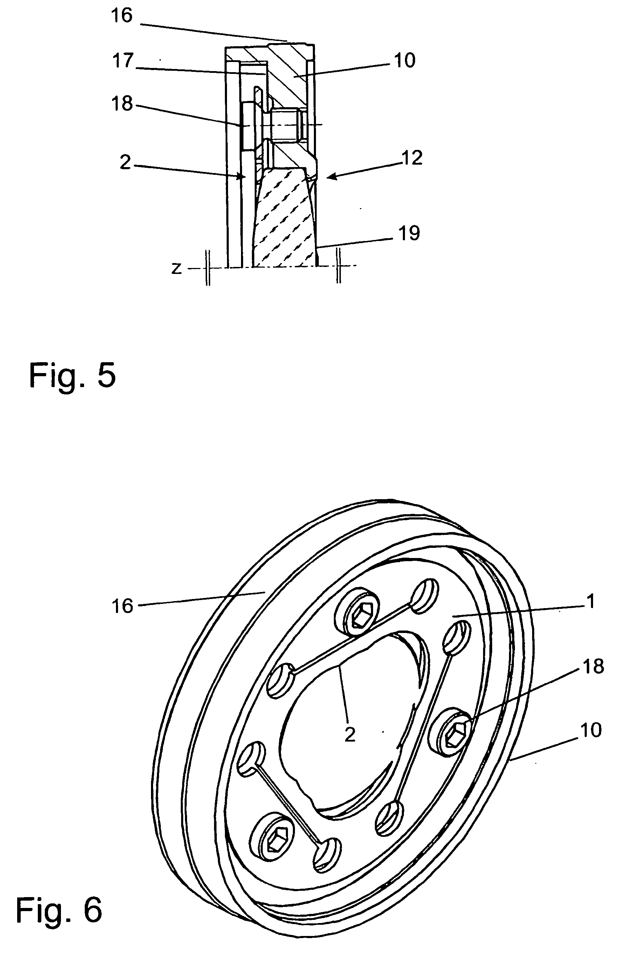

Die Figuren 1 und 2 zeigen den Dreipunkt Federring 1 in zwei Ansichten. Wesentlich und augenscheinlich ist die vollständige 120° Symmetrie der in den Dreipunkt-Federring 1 eingebrachten Strukturen: Feder 2, Druckfläche 3, Öffnung 4, angesenkte Löcher 7, Ausnehmungen 8.
Zunächst hat der Dreipunkt-Federring im Zentrum die freie Öffnung 4 für den ungehinderten Einfall der Strahlung auf ein Optikteil.
Jede der Federn 2 ist durch eine hantelförmige Ausnehmung 8 aus dem Federring herausgebildet. Diese Gestaltung liefert Torsionsachsen 5 und 5', die nicht mit der Achse der Verbiegung 6 übereinstimmen. Jede Feder 2 wirkt als Biegefeder und als Torsionsfeder. Zusammen mit der Länge a (Wirkung als Biegefeder), der Stegbreite b (Wirkung als Torsionsfeder), der Dicke c, und Breite d im Bereich der Druckfläche (Wirkung als Biegefeder) sowie der Materialart führt dies zu den gewünschten Federeigenschaften.
Jede der Federn 2 hat eine Druckfläche 3, deren Radius r kleiner ist als der halbe Durchmesser eines Optikteils (In Figur 5 mit dem Bezugszeichen 19 bezeichnet). Das Optikteil wird nur mit den Druckflächen 3 berührt.

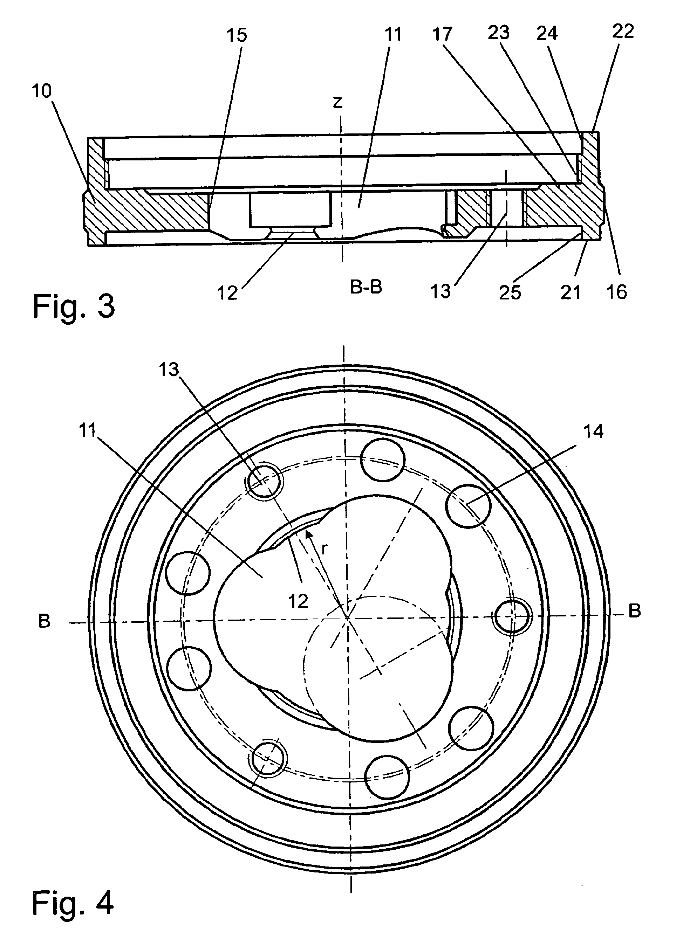

Die Figuren 3 und 4 zeigen den Fassungsring in zwei Ansichten. Der Fassungsring 10 hat ebenfalls eine freie Öffnung 11 für den freien Eintritt von Strahlung. Die radiale Fassung des Optikteils erfolgt spielfrei, jedoch ohne Pressungen in einer inneren Mantelfläche 15. Die innere Mantelfläche 15 hat an einer Seite über den Linsendurchmesser hervorstehende Auflageflächen 12. Diese dienen als axialer Anschlag für das Optikteil, der in nur drei Punkten wirkt. Die Auflageflächen 12 haben den Radius r, der dem der Federn 2 entspricht.

Gewindebohrungen 13 dienen zur Befestigung und Einstellung der Spannkraft des Dreipunkt-Federringes 1 durch Schrauben.
Die Fassung 10 hat weiterhin eine Außenpassung 16, die durch Justierdrehen nach der Lage des Optikteils in dem montierten Fassungsring gefertigt wird. Weiterhin werden die Deckflächen 21 und 22 nach der Lage des Optikteils in der montierten Fassungsring gefertigt, so dass bei einer Stapelung mehrere gleichartiger Fassungsringe Luftabstände der Optikteile und der Zentrierzustand mit hoher Genauigkeit eingehalten werden. Der Fassungsring weist weiterhin Zylinderflächen 23, 24 und 25 auf.

Figur 5 zeigt ein gefasstes Optikteil 19 im Schnitt. Die Befestigung des Dreipunkt-Federringes 1 erfolgt mit Senkkopfschrauben 18. Die Druckfläche 3 der Feder 2 drückt gegenüber der Anschlagfläche 12 auf das Optikteil 19.
Dabei wird der Dreipunkt-Federring im Beispiel nicht gegen eine Anschlagfläche 17 gedrückt. Vielmehr erfolgt eine feinfühlig Einstellung der Zylinderkopfschrauben 18 mit einem Drehmomentschlüssel.

Figur 6 zeigt das gefasstes Optikteil gemäß Fig. 5 in einer perspektivischen Darstellung. Hier sind insbesondere die strenge 120°-Symmetrie und die vergleichsweise geringe Bauhöhe in axialer Richtung ersichtlich.

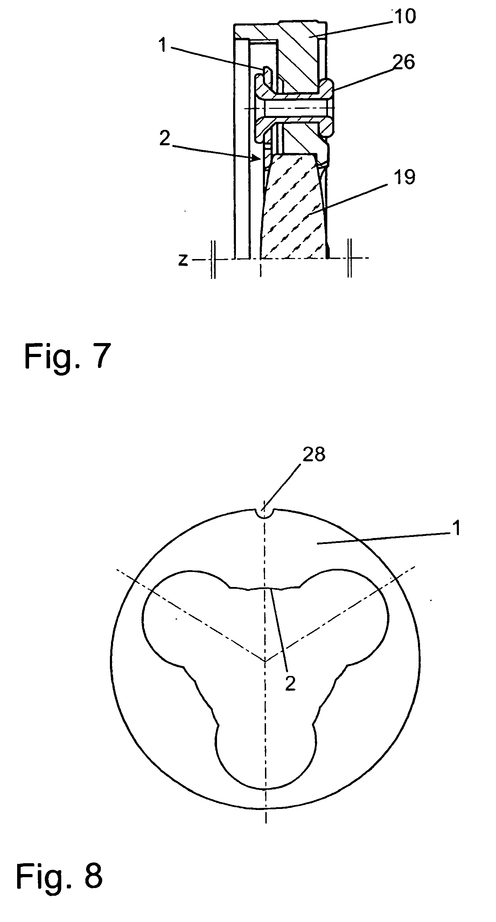

Die Figur 7 zeigt ein alternative Ausführungsform der Erfindung, die auf die drei Zylinderkopfschrauben verzichtet. Der Dreipunkt-Federring 1 wird hier mit drei Nieten 26 verbunden.

Die Figur 8 zeigt einem Dreipunkt-Federring 1 mit einen Ausbildung der Federn 2 als einfache Blattfedern (Wirkung nur als Biegefeder).
In diesem Beispiel ist die Befestigung des Dreipunkt-Federringes 1 mit einem Sprengring vorgesehen, der in eine Nut einer Zylinderfläche des Fassungsringes 10 eingelegt ist. Eine andere Ausführung verwendet einen Vorschraubring, der in den Fassungsring eingeschraubt wird und den Dreipunkt-Federring vorspannt (nicht dargestellt). Bei den zu dieser Figur beschriebenen Befestigungsarten hat der Dreipunkt-Federring eine Einkerbung 28, die mit einer entsprechenden Marke in dem Fassungsring korrespondiert, so dass sichergestellt ist, dass die Druckflächen 3 genau gegenüber den Auflageflächen 12 liegen (siehe dazu auch Figur 3 und Figur 4).

### Bezugszeichenliste

- 1: Dreipunkt-Federring
- 2: Feder
- 3: Druckfläche
- 4: Öffnung
- 5: Torsionsachse
- 6: Achse der Verbiegung
- 7: angesenktes Loch
- 8: Ausnehmung
- 9: Senkung
- 10: Fassungsring
- 11: Öffnung
- 12: Auflagefläche
- 13: Gewindebohrung
- 14: Loch
- 15: innere Mantelfläche
- 16: Außenpassung
- 17: Anschlagfläche
- 18: Senkkopfschraube
- 19: Optikteil

- 21: Deckfläche
- 22: Deckfläche
- 23: Zylinderfläche
- 24: Zylinderfläche
- 25: Zylinderfläche
- 26: Niet

- 28: Einkerbung

- a: Länge
- b: Stegbreite
- c: Dicke
- d: Breite
- r: Radius
- z: axiale Richtung
(Symmetrieachse)
- α: Winkellage der Torsionsachsen

## Patentansprüche

1. Spannungsarme Optikfassung mit einem Fassungsring (10), dessen innere Mantelfläche (15) der Aufnahme eines Optikteils (19) dient, welches damit in einer radialen Richtung (r) zu fixieren ist, wobei die Ausrichtung des Optikteils (19) in einer axialen Richtung (z) durch eine Auflagefläche (12) bestimmt ist, die von der inneren Mantelfläche (15) nach innen so hervorsteht, dass die Auflagefläche auf einem Rand einer ersten optischen Fläche des Optikteils (19) zum Anliegen kommt und bei der ein Dreipunkt-Federring (1) das Optikteil (19) in der axialen Richtung (z) **dadurch** fixiert, dass drei Federn des Dreipunkt-Federrings (1) auf einem Rand einer zweiten optischen Fläche zum Anliegen kommen,
**dadurch gekennzeichnet, dass**
die Auflagefläche (12) des Fassungsringes (10) drei Segmente aufweist, die bezogen auf den Umfang der inneren Mantelfläche (15) verteilt sind und auf dem Rand der ersten optischen Fläche des Optikteils (19) zum Anliegen kommen sowie, dass der Dreipunkt-Federring (1) mit dem Fassungsring (10) so verbunden ist, dass jeweils eine segmentförmige Druckfläche (3) der drei Federn (2) des Dreipunkt-Federringes (1) in der radialen Richtung (r) nur soweit nach innen hervorsteht, dass diese nur in dem Flächenbereich, der einer Auflagefläche (12) des Fassungsringes (10) in der axialen Richtung (z) gegenüberliegt, auf dem Rand der zweiten optischen Fläche des Optikteils (19) drückt.

2. Optikfassung nach Anspruch 1, **dadurch gekennzeichnet, dass**
der Dreipunkt-Federring (1) im unverspannten Zustand ebene, parallel zueinander stehende Ringflächen hat.

3. Optikfassung nach Anspruch 1, **dadurch gekennzeichnet, dass** der Dreipunkt-Federring (1) in seiner Ringfläche drei Ausnehmungen (8) aufweist, welche die Ringfläche in vier Bereiche aufteilen, wobei ein außen liegender Bereich der Befestigung des Dreipunkt-Federringes (1) mit dem Fassungsring (10) dient und drei zentrumsnahe Bereiche als zweiarmig gelagerte Federn (2) ausgebildet sind, die eine gleiche Federsteifigkeit aufweisen.

4. Optikfassung nach Anspruch 2, **dadurch gekennzeichnet, dass** jede der Ausnehmungen (8) spiegelsymmetrisch ist und Torsionsachsen jeder der Federn (2) mit einem gleichen Abstand a und unter einem gleichen Winkel α bezogen zur Symmetrieachse angeordnet sind.

5. Optikfassung nach Anspruch 3, **dadurch gekennzeichnet, dass**
die Ausnehmungen (8) einen hantelförmigen Querschnitt aufweisen.

6. Optikfassung nach Anspruch 1 oder Anspruch 5, **dadurch gekennzeichnet, dass**
die Segmente der Auflageflächen (12) in einem Winkel von 120° angeordnet sind und der Dreipunkt-Federring (1) eine der 120° Teilung entsprechende Symmetrie aufweist.

7. Optikfassung nach Anspruch 1, **dadurch gekennzeichnet, dass**
der Dreipunkt-Federring (1) drei Löcher (14) aufweist und dieser mittels drei Schrauben mit dem Fassungsring (10) verschraubt ist.

8. Optikfassung nach Anspruch 1, **dadurch gekennzeichnet, dass**
der Dreipunkt-Federring (1) mittels eines in eine Zylinderfläche (23) des Fassungsringes (10) eingreifenden Sprengringes, snap-in-Verbindung oder Vorschraubringes befestigt ist oder die Verbindung durch Nieten erfolgt.

## Claims

1. Low-stress optics mount having a mounting ring (10), whose inner peripheral surface (15) serves to receive an optics part (19) which is to be fixed therewith in a radial direction (r), wherein the alignment of the optics part (19) in an axial direction (z) is determined by means of a bearing surface (12) which protrudes inwardly from the inner peripheral surface (15) such that the bearing surface comes to lie on an edge of a first optical surface of the optics part (19) and in which a three-point spring ring (1) fixes the optics part (19) in the axial direction (z) in that three springs of the three-point spring ring (1) come to lie on an edge of a second optical surface, **characterised in that**
the bearing surface (12) of the mounting ring (10) comprises three segments which are distributed in relation to the periphery of the inner peripheral surface (15) and come to lie on the edge of the first optical surface of the optics part (19) and that the three-point spring ring (1) is connected to the mounting ring (10) in such a manner that in each case a segment-shaped pressure surface (3) of the three springs (2) of the three-point spring ring (1) protrudes inwardly in the radial direction (r) only to the extent that this pressure surface presses on the edge of the second optical surface of the optics part (19) only in the surface region which lies opposite to a bearing surface (12) of the mounting ring (10) in the axial direction (z).

2. Optics mount as claimed in claim 1, **characterised in that** in the unclamped state the three-point spring ring (1) has planar, mutually parallel annular surfaces.

3. Optics mount as claimed in claim 1, **characterised in that** the three-point spring ring (1) comprises in its annular surface three cut-outs (8) which divide the annular surface into four regions, wherein an outer region serves to attach the three-point spring ring (1) with the mounting ring (10) and three regions in proximity to the centre are formed as springs (2) which are mounted in a two-armed manner and comprise the same spring rigidity.

4. Optics mount as claimed in claim 2, **characterised in that** each of the cut-outs (8) is mirror-symmetrical and axes or torsion of each of the springs (2) are disposed at an equal spacing a and at the same angle α in relation to the axis of symmetry.

5. Optics mount as claimed in claim 3, **characterised in that** the cut-outs (8) comprise a dumbbell-shaped cross-section.

6. Optics mount as claimed in claim 1 or 5, **characterised in that** the segments of the bearing surface (12) are disposed at an angle of 120° and the three-point spring ring (1) comprises a symmetry which corresponds to the 120°-pitch.

7. Optics mount as claimed in claim 1, **characterised in that** the three-point spring ring (1) comprises three holes (14) and it is screwed to the mounting ring (10) by means of three screws.

8. Optics mount as claimed in claim 1, **characterised in that** the three-point spring ring (1) is attached by means of a snap ring, which engages into a cylindrical surface (23) of the mounting ring, a snap-in connection or a preliminary screw ring or the connection is established by means of rivets.

## Revendications

1. Monture optique à faible contrainte comprenant une bague de monture (10), dont la surface d'enveloppe (15) intérieure sert au logement d'une partie optique (19), qui doit donc être fixée dans une direction (r) radiale, l'orientation de la partie optique (19) dans une direction (z) axiale étant déterminée par une surface d'appui (12), qui dépasse de la surface d'enveloppe interne (15) vers l'intérieur de telle sorte que la surface d'appui vient s'appuyer sur un bord d'une première surface optique de la partie optique (19) et sur laquelle une bague à ressort à trois points (1) fixe la partie optique (19) dans la direction (z) axiale du fait que trois ressorts de la bague à ressort à trois points (1) viennent s'appuyer sur un bord d'une seconde surface optique, **caractérisée en ce que**
la surface d'appui (12) de la bague de monture (10) présente trois segments qui sont répartis par rapport au pourtour de la surface d'enveloppe (15) intérieure et viennent s'appuyer sur le bord de la première surface optique de la partie optique (19) ainsi qu'en ce que la bague à ressort à trois points (1) est reliée à la bague de monture (10) de telle sorte qu'à chaque fois une surface de pression (3) en forme de segment des trois ressorts (2) de la bague à ressort à trois points (1) déborde dans le sens radial (r) vers l'intérieur seulement pour que cette surface appuie seulement dans la zone de surface, qui est opposée à une surface d'appui (12) de la bague de monture (10) dans la direction axiale (z), sur le bord de la seconde surface optique de la partie optique (19).

2. Monture optique selon la revendication 1, **caractérisée en ce que** la bague à ressort à trois points (1) présente dans l'état non tendu des surfaces annulaires planes, parallèles entre elles.

3. Monture optique selon la revendication 1, **caractérisée en ce que** la bague à ressort à trois points (1) présente dans une surface annulaire trois évidements (8) qui divisent la surface annulaire en quatre zones, une zone disposée à l'extérieur servant à la fixation de la bague à ressort à trois points (1) avec la bague de monture (10) et trois zones proches du centre étant réalisées comme des ressorts (2) montés avec deux bras, qui présentent une rigidité élastique identique.

4. Monture optique selon la revendication 2, **caractérisée en ce que** chacun des évidements (8) est symétrique par rapport à un plan et des axes de torsion de chacun des ressorts (2) sont disposés avec une même distance a et sous un même angle α par rapport à l'axe de symétrie.

5. Monture optique selon la revendication 3, **caractérisée en ce que** les évidements (8) présentent une section en forme d'haltère.

6. Monture optique selon la revendication 1 ou la revendication 5, **caractérisée en ce que**
les segments de surface d'appui (12) sont disposés dans un angle de 120° et la bague à ressort à trois points (1) présente une symétrie correspondant à la division de 120°.

7. Monture optique selon la revendication 1, **caractérisée en ce que** la bague à ressort à trois points (1) présente trois trous et celle-ci est vissée au moyen de trois vis (14) avec la bague de monture (10).

8. Monture optique selon la revendication 1, **caractérisée en ce que** la bague à ressort à trois points (1) est fixée au moyen d'un circlip s'engageant dans une surface cylindrique (23) de la bague de monture (10), d'une liaison par encliquetage ou d'une bague de pré-vissage ou bien l'assemblage s'effectue par des rivets.
